# EUROPÄISCHE PATENTSCHRIFT

(11) **EP 4 034 807 B1**
(45) Veröffentlichungstag und Bekanntmachung des Hinweises auf die Patenterteilung: **08.01.2025**
(21) Anmeldenummer: 20745124.6
(22) Anmeldetag: 20.07.2020
(51) Int. Cl.: F21V 5/00, F21V 11/00, F21S 8/04, F21V 3/04, F21Y 115/10, F21Y 103/10

(54) **LEUCHTE MIT BEREICH ZUR FLÄCHIGEN LICHTABGABE**
LUMINAIRE HAVING A REGION FOR EMITTING LIGHT OVER A SURFACE
LUMINAIRE AYANT UNE RÉGION POUR ÉMETTRE DE LA LUMIÈRE SUR UNE SURFACE

(30) Priorität: 24.09.2019 DE 202019105265 U
(43) Veröffentlichungstag der Anmeldung: 03.08.2022
(73) Patentinhaber: Zumtobel Lighting GmbH, 6850 Dornbirn (AT)
(72) Erfinder: LONSDALE, Julian, 6914 Hohenweiler (AT)
(74) Vertreter: Thun, Clemens
(86) Internationale Anmeldenummer: PCT/EP2020/070411
(87) Internationale Veröffentlichungsnummer: WO 2021/058167

(56) Entgegenhaltungen:
- EP-A1- 2 175 188
- EP-A2- 1 043 542
- WO-A2-02/44612
- WO-A2-2013/024978
- DE-A1- 102011 051 038
- DE-U1- 202007 011 212
- US-A1- 2008 218 993
- US-A1- 2017 130 929

## Beschreibung

Die vorliegende Erfindung betrifft eine Leuchte gemäß dem Oberbegriff des Anspruchs 1, welche Leuchtmittel aufweist, sowie eine Abdeckung, die zumindest einen flächigen Bereich zur Lichtabgabe bildet.

Die WO 02/44612 A2 beschreibt eine Flächenleuchte, wobei die Abstrahlfläche lichtstreuende Strukturen aufweisen kann. Zudem kann zwischen den Leuchtmitteln und der Abstrahlfläche ein zusätzliches Lichtvergleichmäßigungsmittel angeordnet sein, welches für zusätzliches Streuung des Lichts sorgt und aus einer Folie gebildet sein kann.

Moderne Leuchten sind oftmals derart ausgebildet, dass sie Licht nicht nur in einer einzigen Art und Weise abgeben, sondern darüberhinausgehend noch eine weitere bzw. zusätzliche Lichtabgabe erfolgt. Während die primäre Lichtabgabe dazu dient, die Aufgabe der Leuchte hinsichtlich ihres Anwendungsgebiets zu erfüllen, wird mit Hilfe der zusätzlichen Lichtabgabe bspw. ein sog. Akzentlicht erzeugt oder ein zusätzlicher Bereich aufgehellt, um das sich hieraus ergebende gesamte Erscheinungsbild der Leuchte selbst aber auch des beleuchteten Bereichs zu verbessern. Die primäre Lichtabgabe dient dann bspw. dazu, gezielt einen bestimmten Bereich unterhalb der Leuchte z.B. zu Arbeitszwecken auszuleuchten oder unterhalb der Leuchte liegende Bereiche gezielt aufzuhellen.

Eine Leuchte, welche Licht in unterschiedlicher Weise im Sinne der obigen Erläuterungen abgibt, wird von der Anmelderin unter der Bezeichnung "ECOOS" vertrieben. Es handelt sich in diesem Fall um eine sich in Längsrichtung erstreckende Leuchte, bei der die Leuchtmittel von einer in etwa U-förmigen Abdeckung umschlossen sind. Die Unterseite der Abdeckung dient hierbei einer gerichteten Lichtabgabe zur Beleuchtung von Arbeitsplätzen oder dergleichen, während hingegen über die Seitenwände der Abdeckung zusätzlich ein geringerer Anteil des Lichts abgegeben wird, um das Erscheinungsbild der Leuchte insgesamt zu verbessern. Hierbei ist vorgesehen, dass im Inneren der Leuchte zu beiden Seiten der Leuchtmittel vor den Seitenwänden der Abdeckung perforierte Aluminiumreflektoren angeordnet sind, deren Lochmuster einen Teil des Lichts durchlässt, welches dann über die Seitenwände der Abdeckung abgestrahlt wird. Die Aluminiumreflektoren reduzieren hierbei den Anteil des über die Seitenwände abgegebenen Lichts derart, dass keine Blendeffekte zu befürchten sind. Weiterhin wird aufgrund der Tatsache, dass die Reflektoren einen gewissen Abstand von den Seitenwänden der Abdeckung aufweisen, ein sog. Tiefeneffekt erzeugt, sodass die Leuchte insgesamt als brillantes Objekt erscheint. Trotz allem können mit Hilfe dieser Leuchte Arbeitsräume oder Kommunikationsbereiche effizient ausgeleuchtet werden, da ein Großteil des von den Leuchtmitteln erzeugten Lichts in der gewünschten Weise gerichtet zur Unterseite hin abgegeben wird.

Die oben angesprochene Leuchte zeichnet sich wie bereits erwähnt durch ihre besonders ansprechende Lichtabgabe und das daraus resultierende Erscheinungsbild aus. Allerdings hat sich herausgestellt, dass die Nutzung der für das Erscheinungsbild verantwortlichen perforierten Aluminiumreflektoren mit gewissen Nachteilen verbunden ist.

Zum einen sind diese verhältnismäßig aufwendig herzustellen und erlauben aufgrund ihrer reflektierenden Eigenschaften nur eine begrenzte Kontrolle hinsichtlich des Anteils des über die Seitenflächen der Abdeckung abgegebenen Lichts. Zum anderen bestehen bei der Herstellung des Lochmusters der Reflektoren gewisse Grenzen. Die Löcher müssen in einem entsprechenden Arbeitsschritt in den Reflektor gestanzt werden, wobei dies sinnvoller Weise nur innerhalb bestimmter Größen möglich ist. Insbesondere sehr kleine Löcher bzw. Öffnungen für die Lichtabgabe und damit sehr feine Muster können nur mit einem hohen Aufwand oder gar nicht erstellt werden.

Der vorliegenden Erfindung liegt deshalb die Aufgabenstellung zugrunde, eine neuartige Möglichkeit zur Verfügung zu stellen, eine zu der oben beschriebenen Lichtabgabe vergleichbare Lichtabgabe für eine Leuchte zu erzielen, allerdings den hierfür erforderlichen Aufwand zu reduzieren.

Die Aufgabenstellung wird durch eine Leuchte, welche die Merkmale des Anspruchs 1 aufweist, gelöst. Vorteilhafte Weiterbildungen der Erfindung sind Gegenstand der abhängigen Ansprüche.

Wie bereits erwähnt soll mit Hilfe der erfindungsgemäßen Leuchte wiederum zumindest teilweise eine Lichtabgabe erzielt werden, welche den oben erwähnten Tiefeneffekt bei einem Beobachter hervorruft. Erfindungsgemäß wird dies nunmehr dadurch erzielt, dass der für die entsprechende Lichtabgabe vorgesehene Bereich eines Lichtabgabeelements aus einem transparenten Material besteht und an einer Seite mit einer Strukturierung versehen ist. Zusätzlich ist zwischen den Leuchtmitteln und dem flächigen Bereich zur Lichtabgabe ein durch eine Kunststofffolie gebildetes plattenförmiges Lichtbeeinflussungselement angeordnet, welches aus einem lichtdurchlässigen Material besteht, allerdings mit einem Muster bedruckt ist.

Gemäß der vorliegenden Erfindung wird also eine Leuchte mit Leuchtmitteln sowie mit einer Abdeckung vorgeschlagen, welche zumindest einen flächigen Bereich zur Lichtabgabe bildet, wobei der flächige Bereich zur Lichtabgabe aus einem transparenten Material besteht und an zumindest einer Seite mit einer Strukturierung versehen ist und wobei zwischen den Leuchtmitteln und dem flächigen Bereich zur Lichtabgabe ein durch eine Kunststofffolie gebildetes plattenförmiges Lichtbeeinflussungselement angeordnet ist, welches aus einem lichtdurchlässigen Material besteht und mit einem Muster bedruckt ist. Hierbei ist die das Lichtbeeinflussungselement bildende Folie in die Abdeckung eingeklemmt derart gelagert, dass das Lichtbeeinflussungselement einen Abstand von der Abdeckung aufweist.

Aus Sicht eines die Leuchte betrachtenden Beobachters ergibt sich dann eine Überlagerung einerseits der Strukturierung der Abdeckung sowie andererseits des Musters des zusätzlichen plattenförmigen Lichtbeeinflussungselements. Hierdurch wird ein sog. Moiré-Effekt erzielt, der dazu führt, dass bei Veränderung des Blickwinkels des Beobachters auch das hieraus resultierende Muster sich insgesamt verändert. Dies führt zu dem angesprochenen und angestrebten Tiefeneffekt beim Betrachten der Leuchte, sodass hier das Licht in besonders ansprechender Weise abgegeben wird. Gleichzeitig ist dieser Effekt allerdings im Vergleich zu der bislang im Stand der Technik bekannten Lösung deutlich einfacher zu realisieren, da das Bedrucken des plattenförmigen Lichtbeeinflussungselements einfacher, kostengünstiger und trotz allem mit größerer Genauigkeit durchgeführt werden kann. Letztendlich kann also nochmals besser Einfluss auf die Art und Weise der Lichtabgabe der Leuchte genommen werden.

Vorzugsweise ist die Strukturierung der Abdeckung an der Innenseite des flächigen Bereichs zur Lichtabgabe ausgebildet. Die Außenseite dieses Bereichs der Abdeckung hingegen ist idealerweise vollständig glatt, was nicht nur das Anlagern von Staub und Schmutz verhindert, sondern zusätzlich auch das Erscheinungsbild der Leuchte verbessert.

Dabei ist vorzugsweise vorgesehen, dass sich die Leuchte entlang einer Längsachse erstreckt und die Strukturierung der Abdeckung parallel zur Längsachse translationsinvariant ausgebildet ist. Insbesondere kann die Strukturierung fresnel-artig ausgebildet sein bzw. durch eine sich in Längsrichtung erstreckende Prismenstruktur gebildet sein. Diese kann im Querschnitt dreieckige, insbesondere sägezahnartig ausgebildete Erhebungen aufweisen.

Das plattenförmige Lichtbeeinflussungselement, welches mit dem Muster bedruckt ist, ist dabei erfindungsgemäß durch eine Kunststofffolie gebildet. Idealerweise weist diese eine gewisse Stärke und damit Eigenstabilität auf, sodass sie in einfacher Weise erfindungsgemäß in die Abdeckung eingeklemmt gelagert werden kann. Das Muster, mit dem die Folie bedruckt ist, ist dabei vorzugsweise in Längsrichtung der Leuchte periodisch ausgebildet. In einer Richtung senkrecht zur Längsrichtung hingegen kann vorgesehen sein, dass sich das Muster verändert.

Die Abdeckung der erfindungsgemäßen Leuchte ist vorzugsweise U-förmig ausgebildet mit zwei Seitenwänden sowie einer die Seitenwand verbindenden Bodenwand, wobei beide Seitenwände flächige Bereiche zur Lichtabgabe bilden und im Sinne der vorliegenden Erfindung wie oben erläutert ausgebildet sind. Die Bodenfläche der Abdeckung hingegen ist vorzugsweise ebenfalls lichtdurchlässig ausgebildet, allerdings für die primäre Lichtabgabe der Leuchte vorgesehen. Hier können verschiedene Maßnahmen zur Beeinflussung des abgegebenen Lichts vorgesehen sein, durch die sichergestellt ist, dass mit der Lichtabgabe die Beleuchtungsaufgabe der Leuchte erfüllt wird.

Letztendlich erlaubt also die erfindungsgemäße Lösung, eine Leuchte zu realisieren, welche hinsichtlich ihrer Lichtabgabeeigenschaften zumindest gleichwertig zu der oben beschriebenen, bislang bekannten Leuchte ist, wobei allerdings das positive Erscheinungsbild der Leuchte mit einem deutlich geringeren Aufwand und insbesondere auch kostengünstiger realisiert werden kann.

Nachfolgend soll die Erfindung anhand der beiliegenden Zeichnung näher erläutert werden. Es zeigen:

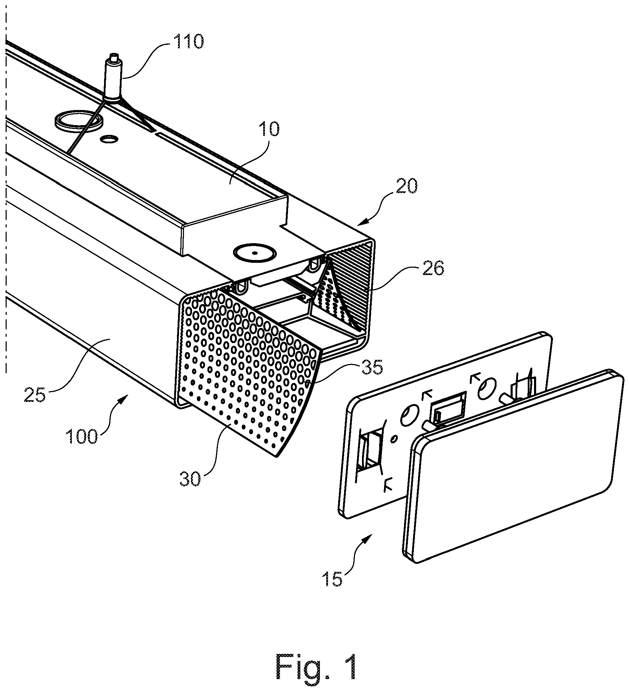

- Figur 1: eine Ansicht des Stirnbereichs einer erfindungsgemäßen Leuchte;
- Figur 2: eine Schnittdarstellung der Leuchte senkrecht zur Längsachse, wobei die für die Lichtabgabe verantwortlichen Komponenten erkennbar sind;
- Figur 2a: eine vergrößerte Ansicht eines Teils einer Seitenwand der Leuchtenabdeckung;
- Figur 3: eine seitliche Ansicht des für die erfindungsgemäße Lichtabgabe vorgesehenen flächigen Bereichs der Abdeckung;
- Figur 4: verschiedene Varianten von Mustern zur Bedruckung des zusätzlichen Lichtbeeinflussungselements und
- Figur 5: das sich aus der Überlagerung der Strukturierung der Abdeckung mit dem Muster ergebende Erscheinungsbild der Leuchte.

Die erfindungsgemäßen Maßnahmen zur Erzeugung des speziellen lichttechnischen Effekts sollen nachfolgend anhand eines Ausführungsbeispiels einer Leuchte beschrieben werden, welche in ihrem Aufbau grundsätzlich der aus dem Stand der Technik bekannten, oben beschriebenen Leuchte entspricht. Allerdings ist darauf hinzuweisen, dass die erfindungsgemäße Lichtabgabe auch bei anders gestalteten Leuchten zum Einsatz kommen könnte.

Die in den Figuren allgemein mit dem Bezugszeichen 100 versehene Leuchte ist länglich ausgeführt und im dargestellten Ausführungsbeispiel als Pendelleuchte ausgebildet. In vergleichbarer Weise wäre allerdings auch ein Deckenanbau der Leuchte 100 denkbar.

Zentrales haltendes Element der Leuchte 100 ist ein sich in Längsrichtung erstreckender Träger 10, welcher der Halterung sämtlicher weiterer Komponenten der Leuchte 100 dient und an dem auch entsprechende Aufhängungselemente 110 befestigt sind. Insbesondere dient der Träger 100 allerdings der Halterung der für die Lichterzeugung erforderlichen Leuchtmittel sowie ggf. erforderlicher Betriebsmittel, die eine der Leuchte 100 zugeführte Versorgungsspannung in eine zum Betreiben der Leuchtmittel geeignete Spannung umsetzen. Dies gilt insbesondere für den bevorzugten Fall, dass als Leuchtmittel sich in Längsrichtung erstreckende LED-Platinen zum Einsatz kommen, welche eine Vielzahl von hintereinander angeordneten LEDs aufweisen.

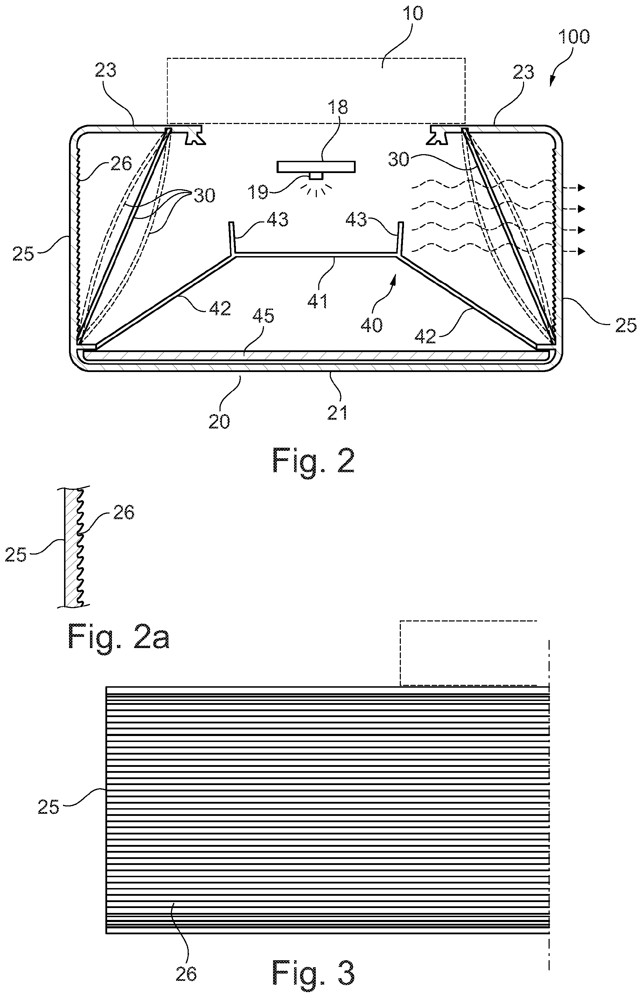

Weiterhin ist an dem Träger 10 eine Abdeckung 20 befestigt, welche im Querschnitt die insbesondere in Figur 2 erkennbare Form aufweist. Es handelt sich also um eine in etwa U-artige Querschnittsform, die eine Bodenfläche 21 sowie zwei Seitenwände 25 aufweist. An ihrer dem Träger 10 zugewandten Oberseite ist die Abdeckung 20 allerdings zusätzlich mit nach innen gerichteten Wandbereichen 23 ausgeführt, die sich bis zum Träger 10 hin erstrecken. Insgesamt umschließt somit die Abdeckung 20 einen länglichen rechteckigen Aufnahmeraum, in dem die für die Lichterzeugung und Lichtabgabe verantwortlichen Komponenten der Leuchte 100 angeordnet sind.

An den Stirnseiten ist die Leuchte 100 jeweils durch entsprechende Stirnelemente 15 abgeschlossen, welche auf die offenen Endbereiche der Abdeckung 20 aufgesteckt und hier mit dieser verbunden werden. Hierdurch wird der Raum im Inneren der Abdeckung 20 vollständig umschlossen, sodass die Leuchte 100 ggf. auch die Anforderungen entsprechender sog. Schutzklassen erfüllen kann, also gegen das Eindringen von Staub, Schmutz und/oder Feuchtigkeit entsprechend geschützt ist.

Die Abdeckung 20 besteht insgesamt aus einem lichtdurchlässigen, vorzugsweise klaren Material. Dementsprechend ist vorgesehen, dass über sämtliche Flächen hinweg eine Lichtabgabe erfolgt, sodass - bzgl. der Längsachse der Leuchte 100 - von einer Lichtabgabe über 360° hinweg gesprochen werden kann.

Die Hauptlichtabgabe soll hierbei über die Bodenfläche 21 erfolgen, sodass eine direkte Lichtabgabe zur Unterseite hin vorliegt, die bspw. zur Beleuchtung von Arbeitsflächen bzw. Arbeitsplätzen oder von unterhalb der Leuchte 100 befindlichen Objekten genutzt wird. Die beiden oberen Wandbereiche 23 der Abdeckung 20 hingegen dienen dazu, einen geringen Anteil des Lichts nach oben bspw. in Richtung einer Decke eines Raums, in dem die Leuchte 100 montiert ist, abzugeben. Hierdurch kann der Deckenbereich oberhalb der Leuchte 100 leicht aufgehellt werden. Auch dieser indirekt in den Raum abgegebene Anteil des Lichts wird über Reflektionen an Raumbegrenzungsflächen auf die Arbeitsfläche gelenkt und ist als Ergänzung zu den weiteren Lichtanteilen maßgeblich für eine angenehme Raumatmosphäre verantwortlich.

Ggf. kann an der dem Innenraum zugewandten Oberfläche der Wandabschnitte 23 der Abdeckung 20 eine Strukturierung oder dergleichen vorgesehen sein, um eine bessere Verteilung des nach oben hin abgegebenen Lichts zu bewirken. Auch für die Lichtabgabe zur Unterseite hin sind im Folgenden näher beschriebene Maßnahmen vorgesehen, um das Licht in gewünschter Weise zu beeinflussen.

Zunächst ist hierbei innerhalb des von der Abdeckung 20 umschlossenen Raums ein optisches Element 40 angeordnet, welches z.B. aus einem lichtstreuenden Material gebildet ist und welches dazu dient, das Licht der in Figur 2 schematisch dargestellten Leuchtmittel 18, 19 vor einer Abgabe insbesondere über die Bodenseite 21 der Abdeckung 20 zu beeinflussen. Das lichtstreuende Element 40 weist hierbei einen etwa H-artigen Querschnitt mit einer unterhalb der Leuchtmittel 18, 19 angeordneten Horizontalfläche 41 auf, von der sich geneigt zwei Arme 42 schräg nach unten im Wesentlichen zu den unteren Ecken der Abdeckung 20 hin erstrecken. Vorzugsweise ist das Element 40 einstückiger Bestandteil der im Strangpressverfahren hergestellten Abdeckung 20 und somit an den unteren Enden mit dieser verbunden, wie Figur 2 zeigt. Während allerdings die verschiedenen seitlichen Wände 21, 23, 25 der Abdeckung aus einem klaren Material bestehen, ist das Lichtbeeinflussungselement 40 durchgängig vorzugsweise aus einem lichtstreuenden Material ausgebildet. Weiterhin sind an den Seitenbereichen der Horizontalfläche 41 jeweils sich nach oben erstreckende Stege 43 vorgesehen.

Das Lichtbeeinflussungselement 40 dient dann dazu, die einzelnen LEDs 19 als individuelle Lichtpunkte aufzulösen. Dies ist insbesondere für die Lichtabgabe über die Bodenfläche 21 der Abdeckung 20 wichtig, da hier eine möglichst gleichmäßige Ausleuchtung des zu beleuchtenden Bereichs erzielt werden soll und ferner die LEDs nicht mehr als einzelne Leuchtmittel wahrnehmbar sein sollen.

Ferner ist im Bereich der klaren Bodenfläche 21 vorzugsweise ein weiteres plattenförmiges Element 45 angeordnet, welches an einer Flachseite eine Mikropyramidenoptik aufweist. Derartige Mikropyramidenoptiken sind an sich bereits bekannt und werden in der Beleuchtungstechnologie dazu verwendet, das flächig abgegebene Licht derart zu beeinflussen, dass es die Leuchte über einen vorgegebenen Winkelbereich verlässt, der insbesondere derart gewählt ist, dass keine störenden Reflexionen oder andere Blendeffekte auftreten. Gleichzeitig trägt auch diese Mikropyramidenoptik nochmals zusätzlich dazu bei, dass die einzelnen LEDs 19 nicht als individuelle Lichtquellen wahrgenommen werden können.

Im darstellten Fall ist die Mikropyramidenoptik wie bereits erwähnt Bestandteil eines separaten plattenförmigen Elements 45, welches im Bodenbereich in die Abdeckung 20 eingelegt bzw. eingeschoben ist, wobei auf diesem Element 45 aufliegend ggf. noch eine nicht dargestellte diffus streuende Folie vorgesehen sein kann. Ggf. könnte jedoch die Mikropyramidenoptik auch bereits in die Bodenfläche 21 der Abdeckung 20 integriert sein. Somit wird bei der dargestellten Leuchte 100 das direkt zur Unterseite hin abgegebene Licht aufeinanderfolgend durch mehrere Komponenten beeinflusst: H-förmiger Diffusor 40 (diffus streuend) - evtl. MPO-Folie (diffus streuend) - Platte 45 mit Mikropyramidenstruktur - klare Bodenfläche 21 der Abdeckung 20.

Die vorliegende Erfindung befasst sich insbesondere mit der Lichtabgabe über die Seitenwände 25 der Abdeckung 20, die zu einem optimierten Erscheinungsbild der Leuchte 100 führen soll. Hier steht weniger der Aspekt der Beleuchtung eines bestimmten Bereichs außerhalb der Leuchte 100 im Vordergrund, sondern es ist gewünscht, dass ein eher geringer Teil des Lichts der Leuchtmittel 18 seitlich derart abgegeben wird, dass die Leuchte 100 für einen Beobachter in besonders ansprechender Weise erscheint.

Hierzu ist vorgesehen, dass die Seitenwände 25 der Abdeckung 20 vorzugsweise aus einem klaren Material bestehen, allerdings eine Strukturierung aufweisen, die in Figur 2 erkennbar und in Figur 2a im Schnitt vergrößert dargestellt ist. Diese Fresnel-artige Strukturierung 26 besteht aus dem Innenraum der Leuchte 100 zugewandten Erhebungen, die Prismen-artig ausgeführt sind. Sie weisen im dargestellten Ausführungsbeispiel insbesondere eine dreieckige, besonders bevorzugt sägezahnartige Querschnittsform auf, um durch die entsprechenden Seitenwände 25 hindurchtretende Lichtstrahlen entsprechend zu beeinflussen.

Wie die seitliche Ansicht gemäß Figur 3 zeigt, ist hierbei vorzugsweise vorgesehen, dass die Strukturierung 26 in Längsrichtung gesehen translationsinvariant ist, sich also in Längsrichtung der Leuchte 100 nicht verändert. Grundsätzlich wäre es allerdings auch denkbar, anders gestaltete Strukturierungen, insbesondere matrixartig ausgebildete Prismen- oder Linsenstrukturen zu verwenden.

Strukturierungen, wie sie soeben beschrieben wurden, sind an sich bereits bekannt, um die Lichtabgabe einer Leuchte positiv zu beeinflussen. Gemäß der vorliegenden Erfindung ist nunmehr allerdings vorgesehen, dass das Licht er Leuchtmittel, bevor es die Abdeckung 20 über die Seitenwände 25 verlassen kann, zusätzlich durch zwei seitlich in dem Innenraum der Leuchte 100 angeordnete Lichtbeeinflussungselemente 30 beeinflusst wird. Es handelt sich hierbei wiederum um Elemente, die aus einem lichtdurchlässigen Material bestehen, allerdings zusätzlich mit einem Muster 35 versehen, insbesondere bedruckt sind, was nachfolgend noch näher erläutert wird.

Erfindungsgemäß werden die Lichtbeeinflussungselemente 30 in Form von Folien zur Verfügung gestellt, welche dann wie in Figur 2 gezeigt in die Abdeckung 20 der Leuchte 100 eingeklemmt werden. Hierzu weisen die Folien eine gewisse Stärke bzw. Dicke von z.B. etwa 0,5 mm auf, sodass das resultierende Lichtbeeinflussungselement 30 eine entsprechende Eigenstabilität aufweist, um das Einklemmen in der dargestellten Weise zu ermöglichen. Abhängig von den Abmessungen, insbesondere der Höhe des Lichtbeeinflussungselements 30 kann hierbei vorgesehen sein, dass sich dieses geradlinig von dem unteren Eckbereich der Abdeckung 20 schräg nach oben erstreckt, wie dies in Figur 2 mit den durchgezogenen Linien dargestellt wird. Allerdings kann auch vorgesehen sein, dass die Höhe des Lichtbeeinflussungselements 30 etwas größer gewählt wird, sodass die Folie gewölbt vorgespannt entweder konvex oder konkav in die Abdeckung 20 eingeklemmt wird.

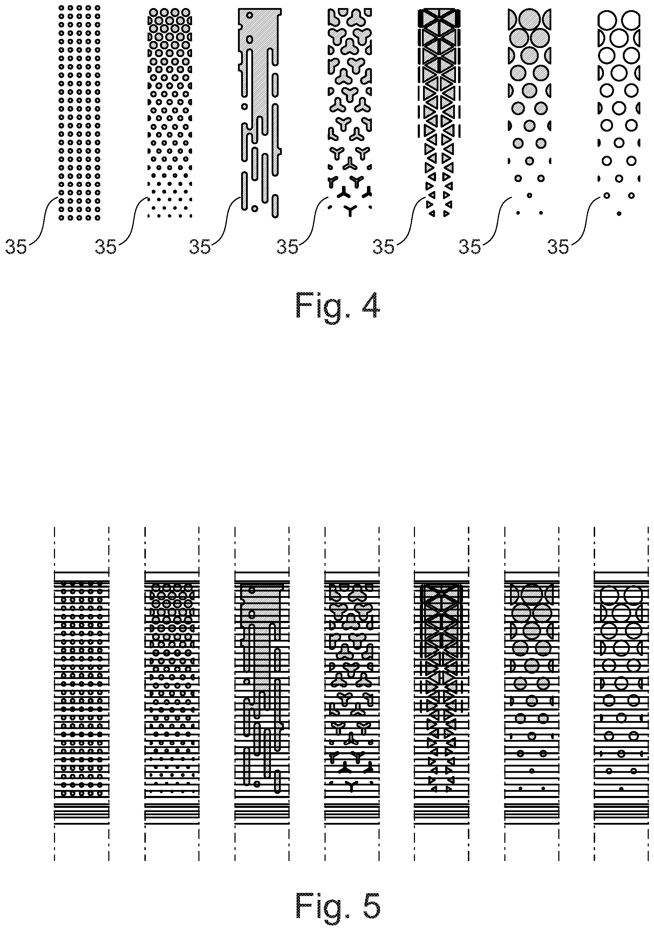

Entscheidend ist, dass das zusätzliche Lichtbeeinflussungselement 30 einen gewissen Abstand von der Seitenwand 25 der Abdeckung 20 aufweist und wie bereits erwähnt mit einem Muster 35 versehen ist. Figur 4 zeigt hierbei Beispiele verschiedener möglicher Muster 35, wobei diese Muster 35 wiederum entweder in Längsrichtung sich nicht verändern, zumindest jedoch periodisch bzw. sich wiederholend ausgeführt sind. In einer Richtung senkrecht hierzu, bei der Darstellung gemäß Figur 4 also von oben nach unten, kann hingegen durchaus eine Veränderung des Musters 35 vorgesehen sein, was insbesondere der Tatsache Rechnung trägt, dass die unteren Bereiche des Lichtbeeinflussungselements 30 weiter von den Lichtquellen 18 entfernt sind und hier ein etwas geringerer Anteil an Licht hindurchtreten wird. Insbesondere kann dementsprechend vorgesehen sein, dass die Größe bzw. Dichte der Strukturen des Musters 35 zur Unterseite hin abnimmt.

Licht, welches über die Seitenwände der Abdeckung 20 abgegeben wird, wird also einerseits durch das bedruckte Muster 35 des Lichtbeeinflussungselements 30 beeinflusst, andererseits durch die Strukturierung 26 der Seitenwände 25 der Abdeckung 20. Es ergibt sich in diesem Fall ein sog. Moiré-Effekt, also ein optischer Effekt, der durch die Überlagerung von regelmäßigen, kleineren Strukturen entsteht. In der Regel führt eine derartige Überlagerung dazu, dass sich für einen Beobachter das Erscheinungsbild eines größeren, groben Rasters ergibt, dessen Aussehen den Mustern aus Interferenzen ähnlich ist. Derartige Effekte treten bspw. in der Digitalfotographie auf. Während sie dort allerdings eher nicht erwünscht sind, führen sie im vorliegenden Fall dazu, dass sich für einen Beobachter ein Tiefeneffekt bei einer Beobachtung der Seitenwände 25 der Leuchte 100 ergibt, sodass ein besonderes Erscheinungsbild erzielt wird. In Figur 5 ist angedeutet, inwiefern das ursprüngliche Muster 35 entsprechend der Darstellung in Figur 4 durch die Überlagerung mit der Strukturierung 26 der Seitenwand 25 beeinflusst wird. Bereits geringfügige Änderungen des Blinkwinkels führen dann allerdings dazu, dass die Überlagerung zu einem anderen Erscheinungsbild führt, was letztendlich den angestrebten Tiefeneffekt ergibt.

Das Zusammenwirken zwischen Strukturierung 26 und Bedruckungsmuster 35 ist dann besonders effizient, wenn beide Komponenten vergleichbare Größenverhältnisse aufweisen. Dies bedeutet, dass die kleinsten Komponenten des bedruckten Musters 35 in etwa vergleichbare Größen aufweisen wie die Fresnel-artigen Strukturen der Seitenwände 25. In einem bevorzugten Ausführungsbeispiel ist vorgesehen, dass diese sägezahnartigen Strukturen Abmessungen im Bereich von etwa 1,5mm aufweisen, wobei dann auch bei den in Figur 4 gezeigten Mustern 35 die entsprechenden Einzelstrukturen in etwa in der gleichen Größenordnung gewählt sein sollten.

Ein Vorteil der erfindungsgemäßen Lösung besteht darin, dass das Bedrucken der optischen Elemente 30 mit den verschiedenen Mustern 35 in sehr einfacher aber dennoch präziser Weise durchgeführt werden kann. Letztendlich eröffnet dies die Möglichkeit, auch unterschiedliche Muster in einfacher Weise zur Verfügung stellen zu können. Hierbei ist vorzugsweise vorgesehen, dass die dunklen Bereiche des Musters nicht vollkommen lichtblockend ausgeführt sind, sondern ein Kontrast zwischen den Hell- und Dunkelstellen der Bedruckung vorliegt, der im Bereich von etwa 30 - 50% liegt. Es hat sich herausgestellt, dass hierdurch einerseits noch eine ausreichend hohe Lichtmenge über die Seitenwände 25 der Abdeckung 20 abgegeben werden kann, andererseits trotz allem der angesprochene Tiefeneffekt ausreichend wahrnehmbar realisiert werden kann.

Letztendlich wird also durch die Erfindung eine Leuchte geschaffen, welche aufgrund äußerst ansprechender lichttechnischer Effekte zu einem positiven Erscheinungsbild führt. Ein Vorteil der Lösung besteht hierbei insbesondere darin, dass der Aufwand zum Erzielen der besonderen lichttechnischen Effekte verhältnismäßig gering ist.

## Patentansprüche

1. Leuchte (100) mit Leuchtmitteln (18) sowie einer Abdeckung (20), welche zumindest einen flächigen Bereich (25) zur Lichtabgabe aufweist,
wobei der flächige Bereich zur Lichtabgabe (25) aus einem transparenten Material besteht und an zumindest einer Seite mit einer Strukturierung (26) versehen ist,
und wobei zwischen den Leuchtmitteln (18) und dem flächigen Bereich (25) zur Lichtabgabe ein durch eine Kunststofffolie gebildetes plattenförmiges Lichtbeeinflussungselement (30) angeordnet ist, welches mit einem Muster (35) bedruckt ist,
**dadurch gekennzeichnet,**
**dass** die das Lichtbeeinflussungselement (30) bildende Folie in die Abdeckung (20) eingeklemmt gelagert ist, derart, dass das Lichtbeeinflussungselement (30) einen Abstand von der Abdeckung (20) aufweist.

2. Leuchte nach Anspruch 1,
**dadurch gekennzeichnet,**
**dass** die Strukturierung (26) an der Innenseite des flächigen Bereichs zur Lichtabgabe (25) ausgebildet ist.

3. Leuchte nach Anspruch 1 oder 2,
**dadurch gekennzeichnet,**
**dass** sich die Leuchte (100) entlang einer Längsachse erstreckt und die Strukturierung (26) in einer Richtung parallel zur Längsachse translationsinvariant ausgebildet ist.

4. Leuchte nach Anspruch 3,
**dadurch gekennzeichnet,**
**dass** die Strukturierung (26) fresnel-artig ausgebildet ist bzw. durch eine sich in Längsrichtung erstreckende Prismenstruktur gebildet ist.

5. Leuchte nach Anspruch 4,
**dadurch gekennzeichnet,**
**dass** die Prismenstruktur im Querschnitt dreieckige, insbesondere sägezahnartig ausgebildete Erhebungen (27) aufweist.

6. Leuchte nach einem der vorherigen Ansprüche sowie einem der Ansprüche 3 bis 5, **dadurch gekennzeichnet,**
**dass** das Muster (35) in Längsrichtung periodisch ausgebildet ist.

7. Leuchte nach Anspruch 6,
**dadurch gekennzeichnet,**
**dass** das Muster (35) in einer Richtung senkrecht zur Längsrichtung sich verändernd ausgebildet ist.

8. Leuchte nach einem der vorherigen Ansprüche,
**dadurch gekennzeichnet,**
**dass** die Abdeckung (20) U-förmig ausgebildet ist mit zwei Seitenwänden sowie einer die Seitenwand verbindenden Bodenfläche (21), wobei beide Seitenwände flächige Bereiche zur Lichtabgabe (25) bilden.

9. Leuchte nach Anspruch 8,
**dadurch gekennzeichnet,**
**dass** die Bodenfläche (21) der Abdeckung (20) ebenfalls lichtdurchlässig ausgebildet ist.

10. Leuchte nach Anspruch 9,
**dadurch gekennzeichnet,**
**dass** der Bodenfläche (21) ein lichtstreuendes Element (40) vorgeordnet ist.

11. Leuchte nach Anspruch 10,
**dadurch gekennzeichnet,**
**dass** das lichtstreuende Element eine parallel zur Bodenfläche (21) der Abdeckung angeordnete Wand (41) sowie zwei sich davon trapez-artig erstreckende Arme (42) aufweist.

12. Leuchte nach Anspruch 10 oder 11,
**dadurch gekennzeichnet,**
**dass** das lichtstreuende Element (40) einstückig mit der Abdeckung (20) verbunden ist.

13. Leuchte nach einem der Ansprüche 10 bis 12,
**dadurch gekennzeichnet,**
**dass** zwischen dem lichtstreuenden Element (40) und der Bodenfläche (21) der Abdeckung (20) ein weiteres optisches Element (45) angeordnet ist, welches eine Mikropyramidenstruktur aufweist.

## Claims

1. Luminaire (100) comprising lighting means (18) and a cover (20) which has at least one planar region (25) for emitting light,
the planar region for emitting light (25) consisting of a transparent material and being provided with a structuring (26) on at least one side,
and a plate-shaped light-influencing element (30) which is formed by a plastics material film and printed with a pattern (35) being arranged between the lighting means (18) and the planar region (25) for emitting light,
**characterized in that**
the film forming the light-influencing element (30) is mounted clamped into the cover (20) such that the light-influencing element (30) is at a distance from the cover (20).

2. Luminaire according to claim 1,
**characterized in that**
the structuring (26) is formed on the inside of the planar region for emitting light (25).

3. Luminaire according to either claim 1 or claim 2,
**characterized in that**
the luminaire (100) extends along a longitudinal axis and the structuring (26) is translationally invariant in a direction parallel to the longitudinal axis.

4. Luminaire according to claim 3,
**characterized in that**
the structuring (26) is Fresnel-like or is formed by a prism structure extending in the longitudinal direction.

5. Luminaire according to claim 4,
**characterized in that**
the prism structure has elevations (27) which are triangular, in particular sawtooth-like, in cross section.

6. Luminaire according to any of the preceding claims and any of claims 3 to 5,
**characterized in that**
the pattern (35) is periodic in the longitudinal direction.

7. Luminaire according to claim 6,
**characterized in that**
the pattern (35) is designed to vary in a direction perpendicular to the longitudinal direction.

8. Luminaire according to any of the preceding claims,
**characterized in that**
the cover (20) is U-shaped, with two side walls and a bottom surface (21) connecting the side wall, the two side walls forming planar regions for light emission (25).

9. Luminaire according to claim 8,
**characterized in that**
the bottom surface (21) of the cover (20) is also translucent.

10. Luminaire according to claim 9,
**characterized in that**
a light-scattering element (40) is arranged in front of the bottom surface (21).

11. Luminaire according to claim 10,
**characterized in that**
the light-scattering element has a wall (41) arranged parallel to the bottom surface (21) of the cover, and two arms (42) extending from said wall in a trapezoidal manner.

12. Luminaire according to either claim 10 or claim 11,
**characterized in that**
the light-scattering element (40) is integrally connected to the cover (20).

13. Luminaire according to any of claims 10 to 12,
**characterized in that**
a further optical element (45) having a micropyramid structure is arranged between the light-scattering element (40) and the bottom surface (21) of the cover (20).

## Revendications

1. Luminaire (100) comportant des moyens d'éclairage (18) ainsi qu'un élément de recouvrement (20), lequel présente au moins une zone plate (25) pour l'émission de lumière,
la zone plate (25) pour l'émission de lumière étant constituée d'un matériau transparent et pourvue d'une structuration (26) sur au moins un côté,
et un élément (30) influençant la lumière en forme de plaque, formé par une feuille en matériau synthétique, étant disposé entre les moyens d'éclairage (18) et la zone plate (25) pour l'émission de lumière, lequel élément est imprimé d'un motif (35),
**caractérisé**
**en ce que** la feuille formant l'élément (30) influençant la lumière est montée serrée dans l'élément de recouvrement (20), de telle sorte que l'élément (30) influençant la lumière présente un écart par rapport à l'élément de recouvrement (20).

2. Luminaire selon la revendication 1,
**caractérisé**
**en ce que** la structuration (26) est réalisée sur le côté intérieur de la zone plate (25) pour l'émission de lumière.

3. Luminaire selon la revendication 1 ou 2,
**caractérisé**
**en ce que** le luminaire (100) s'étend le long d'un axe longitudinal et la structuration (26) est réalisée de manière invariante en translation dans une direction parallèle à l'axe longitudinal.

4. Luminaire selon la revendication 3,
**caractérisé**
**en ce que** la structuration (26) présente une réalisation de type fresnel ou, selon le cas, est formée par une structure prismatique s'étendant dans la direction longitudinale.

5. Luminaire selon la revendication 4,
**caractérisé**
**en ce que** la structure prismatique présente en section transversale des élévations (27) triangulaires, en particulier en dents de scie.

6. Luminaire selon l'une des revendications précédentes ainsi que l'une quelconque des revendications 3 à 5,
**caractérisé**
**en ce que** le motif (35) est réalisé de manière périodique dans la direction longitudinale.

7. Luminaire selon la revendication 6,
**caractérisé**
**en ce que** le motif (35) est réalisé de manière à varier dans une direction perpendiculaire à la direction longitudinale.

8. Luminaire selon l'une des revendications précédentes,
**caractérisé**
**en ce que** l'élément de recouvrement (20) est réalisé en forme de U comportant deux parois latérales ainsi qu'une surface de fond (21) reliant la paroi latérale, les deux parois latérales formant des zones plates (25) pour l'émission de lumière.

9. Luminaire selon la revendication 8,
**caractérisé**
**en ce que** la surface de fond (21) de l'élément de recouvrement (20) est également réalisée de manière à laisser passer la lumière.

10. Luminaire selon la revendication 9,
**caractérisé**
**en ce qu'**un élément (40) diffusant la lumière est disposé devant la surface de fond (21).

11. Luminaire selon la revendication 10,
**caractérisé**
**en ce que** l'élément diffusant la lumière présente une paroi (41) disposée parallèlement à la surface de fond (21) de l'élément de recouvrement ainsi que deux bras (42) s'étendant en trapèze à partir de celle-ci.

12. Luminaire selon la revendication 10 ou 11,
**caractérisé**
**en ce que** l'élément (40) diffusant la lumière est relié d'un seul tenant à l'élément de recouvrement (20).

13. Luminaire selon l'une des revendications 10 à 12,
**caractérisé**
**en ce qu'**un autre élément optique (45) est disposé entre l'élément (40) diffusant la lumière et la surface de fond (21) de l'élément de recouvrement (20), lequel autre élément présente une structure micropyramidale.
